# EUROPEAN PATENT APPLICATION

(11) **EP 4 375 918 A1**
(43) Date of publication of application: **29.05.2024**
(21) Application number: 22209768.5
(22) Date of filing: 28.11.2022
(51) Int. Cl.: G06T 3/40, G06T 5/00

(54) **IMAGE PROCESSING**

(71) Applicant: Koninklijke Philips N.V., 5656 AG Eindhoven (NL)
(72) Inventor: PEZZOTTI, Nicola, Eindhoven (NL); WUELKER, Christian, Eindhoven (NL); DE WEERDT, Elwin, 5656AG Eindhoven (NL)
(74) Representative: Philips Intellectual Property & Standards

(57) **Abstract**

Proposed concepts pertaining to preserving data of an image that is processed using a machine learning-based algorithm. In particular, embodiments of the invention propose: extracting, from an input image, image preservation data describing data of the input image to be preserved; transforming the input image to a transformed image with a ML algorithm; and then modifying the transformed image by enforcing the preservation data on the transformed image in order to create an output image. By enforcing the preservation data on the transformed image, it may be ensured that the data of the input image to be preserved is reintroduced or maintained within the final output image.

## Description

### FIELD OF THE INVENTION

The present invention relates to the field of processing images, and in particular to processing images with machine learning algorithms.

### BACKGROUND OF THE INVENTION

The use of machine learning (ML) algorithms to process an input image in order to generate a new image is widely known. In particular, Artificial Intelligence/Deep Learning can be used with medical images (such a MR and CT images) for image reconstruction (e.g. resolution enhancement and/or noise removal).

By way of example, super resolution models can be used to obtain a higher resolution image that is perceivably sharper than the original input image. However, super-resolution models are typically trained in an end-to-end fashion without imposing any prior knowledge on the preservation of the original input image. As a result, a poorly trained model can negatively impact (i.e. corrupt) data in the original image, reducing reliability of the higher resolution image.

Similarly, denoising architectures do not have a strongly imposed safety mechanism (i.e. a process to ensure certain data is preserved or maintained).

There is a desire to process images using a ML algorithm in manner which helps to ensure particular data of interest and/or important data is not lost or corrupted by the transformation(s) applied by the ML algorithm.

### SUMMARY OF THE INVENTION

The invention is defined by the claims.

According to examples in accordance with an aspect of the invention, there is provided an image processing method comprising: extracting, from an input image, image preservation data describing data of the input image to be preserved; processing the input image with a machine learning algorithm to generate a predicted image, the machine learning algorithm being trained to predict a transformed version of the input image; and modifying the predicted image based on the image preservation data to generate an output image.

Proposed concepts thus aim to provide schemes, solutions, concepts, designs, methods and systems pertaining to preserving data of an image that is processed using a ML-based algorithm. Such concepts may help to improve confidence in deep learning image processing (e.g. reconstruction) models.

In particular, embodiments of the invention propose: extracting, from an input image, image preservation data describing data of the input image to be preserved; transforming the input image to a transformed image with a ML algorithm; and then modifying the transformed image by enforcing the preservation data on the transformed image in order to create an output image. By enforcing the preservation data on the transformed image, it may be ensured that the data of the input image to be preserved is reintroduced or maintained within the final output image.

A proposed concept is to implement a safety mechanism that is arranged to preserve part of the original input image data. By defining image preservation data that describes data of the input image to be preserved, the image preservation data can be leveraged to modify the transformed image (i.e. the processed version of the input image) provided by an ML algorithm. Such modification based on the image preservation data can blend or reintroduce the data to be preserved into the transformed image, thereby ensuring that the data to be preserved is not corrupted, modified or otherwise lost as a result of the transformation caused by the ML algorithm.

Embodiments may be applied to any deep-learning-based image processing architecture (such as denoising models and super resolution models) to enforce that a signal in the original/input image is not disrupted, corrupted, or otherwise lost by the image processing. Since this approach is not learned, but directly enforced on the output of the deep-learning-based processing, it may provide improved confidence that the image processing architecture remains stable. This, in turn, may allow for easier regulatory approval and/or adoption of the image processing techniques.

Also, the proposed concept(s) may be not be limited to 2D images but may also be applied on 3D or higher dimensional images, or even on raw data.

In some embodiments, the image preservation data may describe spatial frequency data of the input image for a frequency range of interest. Modifying the predicted image based on the image preservation data to generate an output image may then comprise modifying spatial frequency data of the predicted image based on the spatial frequency data of the input image for the frequency range of interest. By way of example, modifying spatial frequency data of the predicted image may comprise replacing, for the frequency range of interest, spatial frequency data of the predicted image with spatial frequency data of the input image. In this way, embodiments may preserve original content of the input image for one or more frequencies. For instance, unlike conventional processing algorithms, embodiments may ensure that the low frequency content of the input image is maintained. Embodiments may thus ensure improved control on the resulting output image.

The machine learning algorithm may be trained to predict a transformed version of the input image based on a machine learning model that is configured to perform at least one of: a super-resolution reconstruction of the input image; denoising of the input image; anti-ringing of the input image; and sharpening of the input image. Embodiments may therefore be employed in conjunction with a wide range of ML-based image processing models/algorithms. Existing/conventional ML algorithms may therefore be leveraged to facilitate the implementation of proposed embodiments.

The machine learning algorithm may be trained using a training algorithm configured to receive an array of training inputs and respective known outputs, wherein a training input comprises a training image, and wherein a respective known output comprises an output image obtained according to a proposed embodiment. That is, the data to be preserved may be reinserted into the network output before comparing with the training target and computing the training loss during training. In this way, the ML model may learn to provide an output which - after re-insertion of the data to be preserved - is equal to the training target. In other words, an embodiment may learn to "anticipate" that data preservation will be applied to its output, and provide an output that accommodates this.

Previously generated output images using the proposed concept(s) may thus be learnt and leveraged to make future image predictions that automatically preserve data of interest. That is, previously obtained output images may thus be used for training the employed ML-based algorithm. An end-to-end training concept may therefore be proposed which helps the ML model to generate a prediction (i.e. transformed image) that, after re-inserting the data to be preserved, is as close as possible to the training target.

Put another way, embodiments may support end-to-end training concept that employs output images obtained using the proposed concept(s) for subsequent training.

In some embodiments, the machine learning algorithm may be trained using a training algorithm configured to receive an array of known training outputs and respective training inputs, wherein a known training output comprises a training image, and wherein a respective training input comprises a transformed or simulated (e.g. low resolution or noisy) version of the training image. For instance, a lower resolution version of a training image may be obtained by blurring the training image in image space, and the lower resolution image may form the training input associated with the training output image.

Some embodiments may further comprise computing a loss value based on the output image and a respective known output for the input image. For instance, the input image may comprise a known training input image having a respective known output image. An output image may firstly be generated according to a proposed embodiment, and then a loss may be calculated/computed against the respective known output image for the input image. The computed loss value may then be used for end-to-end training.

In an embodiment, extracting, from the input image, image preservation data may comprise extracting the k-space of the input image.

In another embodiment, extracting, from the input image, image preservation data may comprise splitting the input image into two or more frequency ranges.

In yet another exemplary embodiment, extracting, from the input image, image preservation data may comprise transforming the input image to the frequency domain to generate a frequency domain representation of the input image; and determining image preservation data based on the frequency domain representation of the input image.

Various approaches to extracting information describing data to be preserved may therefore be employed by embodiments. In this way, a high degree of flexibility and/or freedom may be provided by the proposed concept(s).

The input image may, for example, comprise an MRI, PET/SPECT, Sonography or CT image. Embodiments may be used in conjunction with a range of image, and in particular a range of medical images. Embodiments may therefore be of relevance and benefit to the field of medical image processing.

According to another aspect, there is provided a computer program product, wherein the computer program product comprises a computer-readable storage medium having computer-readable program code embodied therewith, the computer-readable program code configured to perform all of the steps of a proposed embodiment.

Thus, there may also be provided a computer system comprising: a computer program product according to proposed embodiment; and one or more processors adapted to perform a method according to a proposed concept by execution of the computer-readable program code of said computer program product.

According to still another aspect of the invention, there is provided an image processing system comprising: a data extraction unit configured to extract, from an input image, image preservation data describing data of the input image to be preserved; a machine learning unit configured to processing the input image with a machine learning algorithm to generate a predicted image, the machine learning algorithm being trained to predict a transformed version of the input image; and a processor adapted to modify the predicted image based on the image preservation data to generate an output image.

Part of the system may be remotely located from a user device for image processing. In this way, a user (such as a medical professional) may have an appropriately arranged local system that can receive information about the input image at a location remotely located from the system. Embodiments may therefore enable a user to dynamically adjust or adapt image processing using a local system (which may, for example, comprise a portable display device, such as a laptop, tablet computer, mobile phone, PDA, etc.). By way of example, embodiments may provide an application for a mobile computing device, and the application may be executed and/or controlled by a user of the mobile computing device.

The system may further include: a server device comprising the image processing system; and a client device comprising a user-interface. Dedicated data processing means may therefore be employed for the purpose of processing the input image with a machine learning algorithm, thus reducing processing requirements or capabilities of other components or devices of the system.

The system may further include a client device, wherein the client device comprises a data extraction unit, machine learning algorithm, processor, and a display unit. In other words, a user may have an appropriately arranged client device (such as a laptop, tablet computer, mobile phone, PDA, etc.) which processes an input image and generate a displays control signal or displaying the resulting output image. Purely by way of example, embodiments may therefore provide an image processing system, wherein real-time communication between a user and a medical imaging device is provided and can have its functionality extended or modified according to proposed concepts, for example.

It will be understood that processing capabilities may therefore be distributed throughout the system in different ways according to predetermined constraints and/or availability of processing resources.

One or more concepts are provided for ML-based image processing. By way of example, proposed embodiments may address the issue of original input data being corrupted or lost by a ML-based processing algorithm. Images of higher quality and/or improved reliability may thus be provided by the proposed concept(s).

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a flow diagram of a computer-implemented method for image processing according to an embodiment;
Fig. 2 is simplified block diagram illustrating a proposed image processing method that employs a safety mechanism for preserving image data within a final output image;
Fig. 3 depicts a modification to the embodiment of Fig. 2, wherein the image processing performs super resolution of an input medical image;
Fig. 4 depicts a modification to the embodiment of Fig. 2, wherein the image processing performs de-noising of an input medical image;
Fig. 5 shows exemplary results of employing a simple super resolution network without using the proposed data perseveration concept(s);
Fig. 6 shows exemplary results of employing a simple super resolution network using the proposed data perseveration concept(s);
Fig. 7 depicts a simplified block diagram of an image processing system according to an embodiment; and
Fig. 8 is a simplified block diagram of a computer within which one or more parts of an embodiment may be employed.

### DETAILED DESCRIPTION OF EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. The mere fact that certain measures are recited in mutually different dependent claims does not indicate that a combination of these measures cannot be used to advantage.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

It should be understood that the Figures are merely schematic and are not drawn to scale. It should also be understood that the same reference numerals are used throughout the Figures to indicate the same or similar parts.

The invention proposes concepts for improving ML-based image processing. In particular, embodiments may provide a method and/or system which may help to enforce that a signal/data in an original image is not disrupted by the ML-based processing. In this way, particular image data of interest or importance may be preserved so that is present in an output image of the image processing procedure. For instance, because the proposed approach for preserving data is not learned, but directly enforced in/on an output image, it may provide improved (e.g. increased) confidence that the ML-based algorithm (such as a super-resolution network or denoising algorithm) remains stable.

Proposed concepts may be based on a realisation that data of an input image (such as a specified frequency band in the original image) may be preserved without the normal drawbacks of applying a correction outside of the deep learning model. In particular, it is proposed to employ a safety mechanism in an ML-based image processing procedure which extracts, from an input image, image preservation data describing data of the input image to be preserved. After the input image is transformed by ML algorithm into a transformed image, the transformed image is modified based on the preservation data so as to create an output image comprising the data to be preserved. An advantage of such an approach is that it may be applied to any existing ML model/algorithm, thus allowing it to be integrated into conventional ML-based image processing methods/systems.

For instance, embodiments may be used in conjunction with trainable super-resolution models and trainable denoiser models which find widespread use in the field of medical image processing and analysis. Accordingly, embodiments may be used in relation to medical imaging processing, analysis and/or diagnosis.

Also proposed is a concept of using output images generated according to the proposed approach(es) for training the employed ML-based algorithm. That is, an end-to-end training concept may be proposed which help the ML model to generate a prediction (i.e. transformed image) that, after re-inserting the data to be preserved, is as close as possible to the training target. Such end-to-end training may ensure that the proposed safety mechanism produces images of optimal image quality.

By way of example only, illustrative embodiments may be utilized in many different types of clinical, medical or subject-related imaging applications. Illustrative embodiments may, for example, be employed in medical imaging platforms as part of a clinical decision support system.

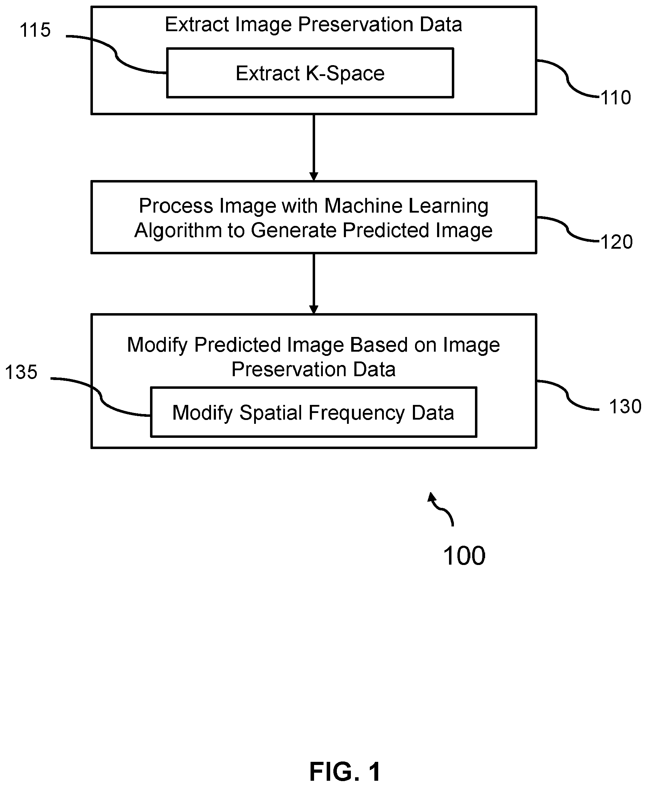

Fig. 1 illustrates a flow diagram of a computer-implemented method 100 for image processing according to an embodiment. Here, the image to be processed (i.e. the input image) is a MRI or CT image. However, it is to be understood that other types of medical images, or even other types of non-medical images, may be equally applicable to being processed by proposed embodiments.

The method 100 begins with the step 110 of extracting, from the input image, image preservation data describing data of the input image to be preserved. Here, the image preservation data describes spatial frequency data of the input image for a frequency range of interest. To obtain such spatial frequency data of the input image, the step 110 of extracting image preservation data comprises the step 115 of extracting the k-space of the input image.

Next, in step 120, the input image is provided to a neural network (NN)-based machine learning algorithm. The machine learning algorithm is trained to predict a transformed version of the input image.

The structure of an artificial NN (or, simply, neural network (NN)) is inspired by the human brain. Neural networks are comprised of layers, each layer comprising a plurality of neurons. Each neuron comprises a mathematical operation. In particular, each neuron may comprise a different weighted combination of a single type of transformation (e.g. the same type of transformation, sigmoid etc. but with different weightings). In the process of processing input data, the mathematical operation of each neuron is performed on the input data to produce a numerical output, and the outputs of each layer in the neural network may be fed into one or more subsequent layers. The final layer provides the output.

There are several types of neural network, such as convolutional neural networks (CNNs), Graph Neural Network (GNNs) and recurrent neural networks (RNNs) for example. However, the exemplary embodiment of Fig. 1 employs a CNN, because CNNs are known to be particularly advantageous for image processing.

Methods of training a machine-learning algorithm are well known. Typically, such methods comprise obtaining a training dataset, comprising training input data entries and corresponding training output data entries. An initialized machine-learning algorithm is applied to each input data (e.g. input image) entry to generate predicted output data entries (e.g. predicted images). An error between the predicted output data entries and corresponding training output data entries is used to modify the machine-learning algorithm. This process can be repeated until the error converges, and the predicted output data entries are sufficiently similar (e.g. ±1%) to the training output data entries. This is commonly known as a supervised learning technique.

For example, weightings of the mathematical operation of each neuron may be modified until the error converges. Known methods of modifying a neural network may employ gradient descent, backpropagation algorithms and so on.

The training input data entries for the machine learning algorithm used in method 100 correspond to example images (i.e. training images). The training output data entries correspond to transformed (super-resolution) versions of the training images. That is, the machine learning algorithm is trained using a training algorithm configured to receive an array of training inputs and respective known outputs, wherein a known output comprises a (e.g. high-resolution) training image, and wherein a respective training input comprises a transformed/simulated (e.g. low-resolution or blurred) version of the training image. In this way, the machine learning algorithm is trained to output a predicted super-resolution version of an input image it is provided with.

At step 130, the predicted image output by the machine learning algorithm (i.e. the predicted image generated in step 120) is modified based on the image preservation data so as to generate an output image. Here, step 130 of modifying the predicted image based on the image preservation data to generate an output image comprises the step 135 of modifying spatial frequency data of the predicted image based on the spatial frequency data of the input image for the frequency range of interest. Specifically, modifying spatial frequency data of the predicted image comprises replacing, for the frequency range of interest, spatial frequency data of the predicted image with spatial frequency data of the input image. In this way, the data of the input image to be preserved is included in the final output image.

In other embodiments, the step 135 of modifying the predicted image may not comprise direct replacement of spatial frequency data but may instead comprise adjusting spatial frequency data of the predicted image in other ways. For example, for the frequency range of interest, the spatial frequency data of the predicted image may be merged or averaged with spatial frequency data of the input image. Alternative embodiments may thus have a smooth transition (e.g. locally weighted average) between the frequencies in the model output and the frequencies to be preserved.

It is noted that images provided by such an embodiment may be used to train the machine-learning model. For instance, the machine-learning model may be trained in such a way that it produces a predicted image that, after re-inserting the data to be preserved, provides an image as close as possible to the training target.

By way of example, for an implementation where the machine-learning algorithm is adapted to perform Super-Resolution in the image domain, it may be desired to preserve the measured low-frequency information of the input image, and only "extrapolate" this information into the highfrequency regimen of the frequency domain. However, performing Super-Resolution in the image domain and then simply re-inserting the measured low-frequency information in the frequency domain may cause inconsistencies in frequency domain leading to undesired effects in the image domain. It is therefore proposed to train the Super-Resolution model in such a way that the low-frequency part of the input to be preserved is re-inserted into the model output before the training loss is evaluated and the model weights are updated. From investigations, it has been found that such an end-to-end training proposal can be advantageous by helping to ensure that the proposed safety mechanism for preserving image data produces a desired image quality.

Although the examples above have been described with reference to the machine learning algorithm being trained to perform a super-resolution reconstruction of the input image, it is to be understood that the proposed concept(s) may be used in conjunction with machine learning algorithms that are trained to perform other image transformations. For instance, in other embodiments, the machine learning algorithm may be trained to perform denoising of the input image, anti-ringing of the input image, or sharpening of the input image.

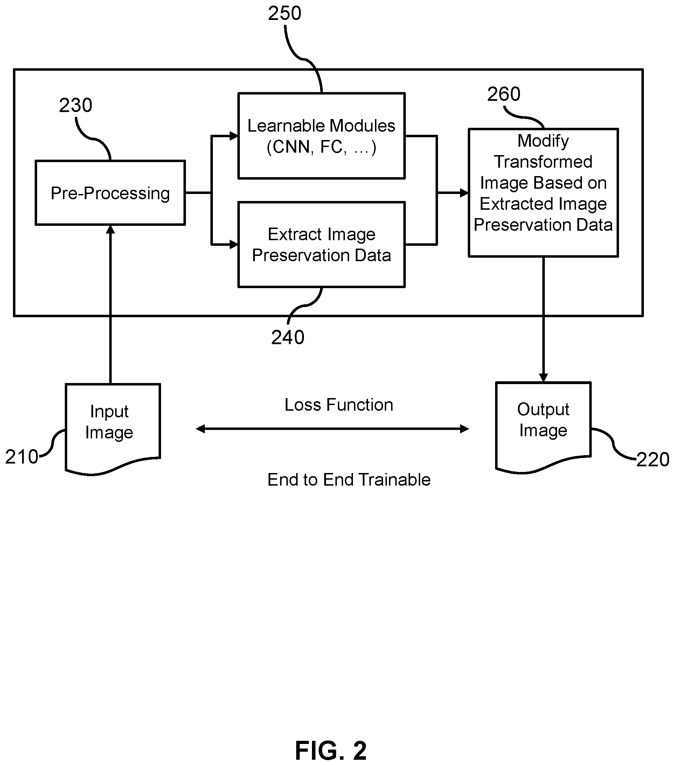

Similarly, other approaches to extracting image preservation data may be employed by proposed embodiments. Such approaches may be employed in the image domain or in the frequency domain. For example, the step of extracting, from the input image, image preservation data may comprise splitting the input image into two or more frequency ranges. In another example, the step of extracting, from the input image, image preservation data may comprise: transforming the input image to the frequency domain to generate a frequency domain representation of the input image; and determining image preservation data based on the frequency domain representation of the input image. By way of further explanation, an overview of the proposed concept(s) will now be described with reference to Fig. 2.

Fig. 2 is a simplified block diagram illustrating a proposed image processing method that employs a safety mechanism for preserving image data within a final output image.

Given an input image 210 to be processed, it is desired to obtain an output image 220 according to a prescribed loss function and training objective. This may comprise super resolution, anti-ringing or denoising, for example.

The input image may first be pre-processed 230 according to the task at hand.

Data of the input image 210 to be preserved (e.g. a selected frequency band) is selected and image preservation data describing the data to be preserved is extracted 240.

The learnable modules 250 (typically implemented with a deep learning approach) receive the pre-processed image as an input and perform their trained transformation(s) (learned from training data).

Finally, the output of the learnable modules (i.e. predicted image) is modified 260 according to the image preservation data by replacing data (e.g. the selected frequency band) so as to generate the final output image 220.

Thus, in the example of Fig. 2, given an input image 210, data is selected to be preserved and extracted 240. The learnable modules 250 act on the input image to provide a precited image, and then the data to be preserved is replaced or merged into the predicted image to provide the final output image. By implementing in an end-to-end trainable fashion, the embodiment may avoid artifacts being introduced by replacing the data to be preserved bands.

It will be understood that several different embodiments for learning modules (i.e. machine learning algorithm) may be implemented. For example, a machine-learning algorithm may perform: super-resolution of an image; denoising of a medical image; anti-ringing of a medical image; or sharpening of a medical image. Thus, although the above example has been described with reference to extracting data to be preserved via the frequency domain, other embodiments may not extract data from the frequency domain. For instance, processing in the image domain may be employed.

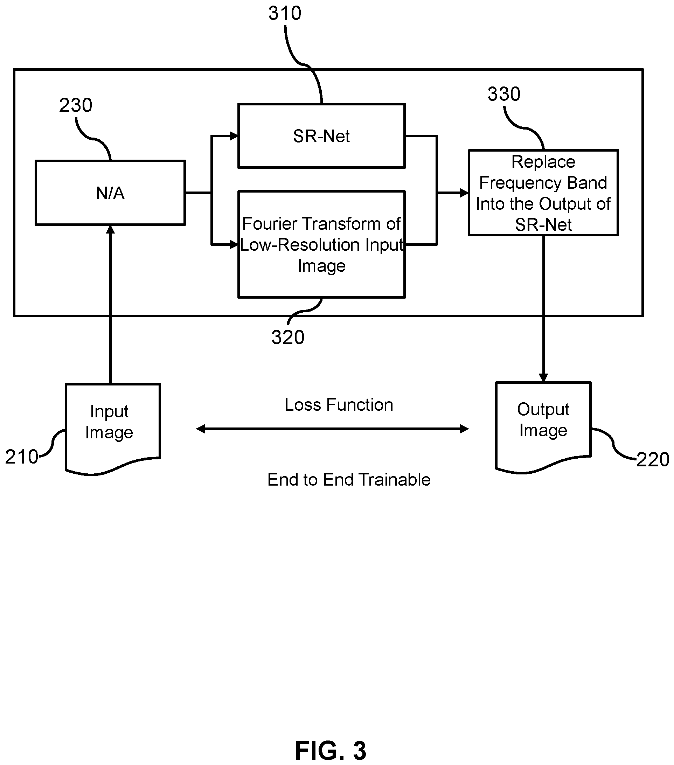

Referring now to Fig. 3, there is presented an exemplary embodiment, wherein the machine-learning algorithm is adapted to perform super resolution of a medical image. Specifically, Fig.3 depicts a modification to the embodiment of Fig. 2, wherein the image processing performs super resolution of an input medical image.

In this example, no pre-processing 230 is performed.

The image data to be preserved is a frequency band to be preserved that corresponds to the Fourier transform of the low-resolution image.

The super resolution is performed by a SR-Net 310. However, it is noted that different architectures can be used (such as for example but not limited to those noted in a paper entitled by "Deep Learning for Single Image Super-Resolution: A Brief Review" by Yang et al.).

Finally, in the Fourier transform of the output of the SR-Net, the central frequency band is replaced 330 using the frequencies in the original input image.

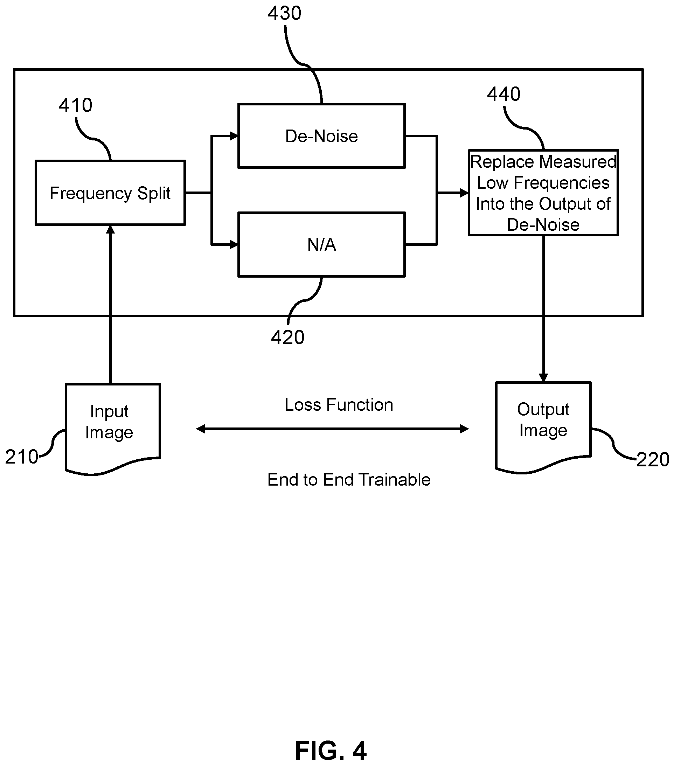

Referring now to Fig. 4, there is presented an exemplary embodiment, wherein the machine-learning algorithm is adapted to perform de-noising of a medical image. Specifically, Fig. 4 depicts a modification to the embodiment of Fig. 2, wherein the image processing performs de-noising of an input medical image.

In this example, a frequency split of the input image is performed as pre-processing 410, resulting in the high frequencies of the input image which are used as input to the denoising model 430. The low frequency information bypasses 420 the denoising model 430 as data to be preserved. Finally, in the output of the de-noising model, the extracted low frequency information is inserted to counteract potential drifts in the denoising model, thereby improving fidelity.

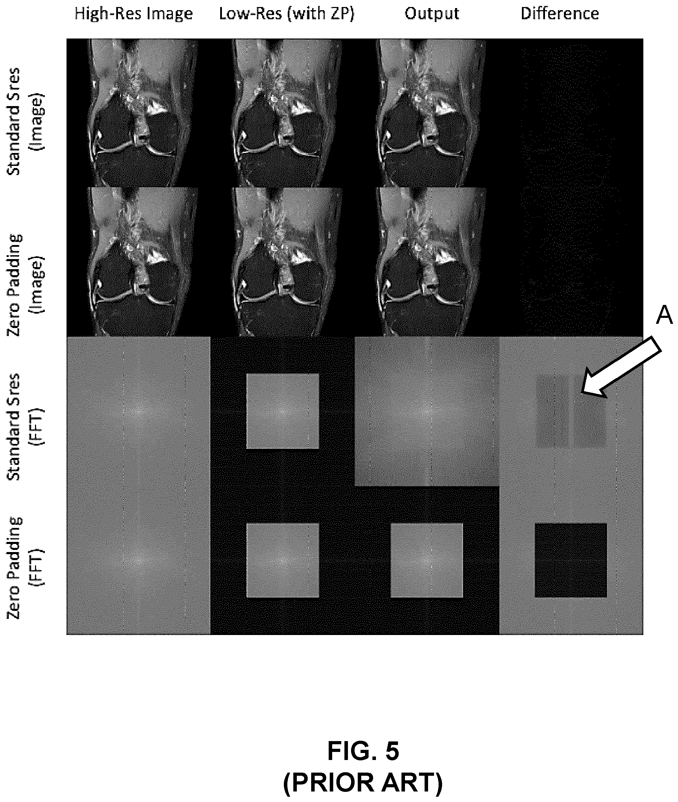

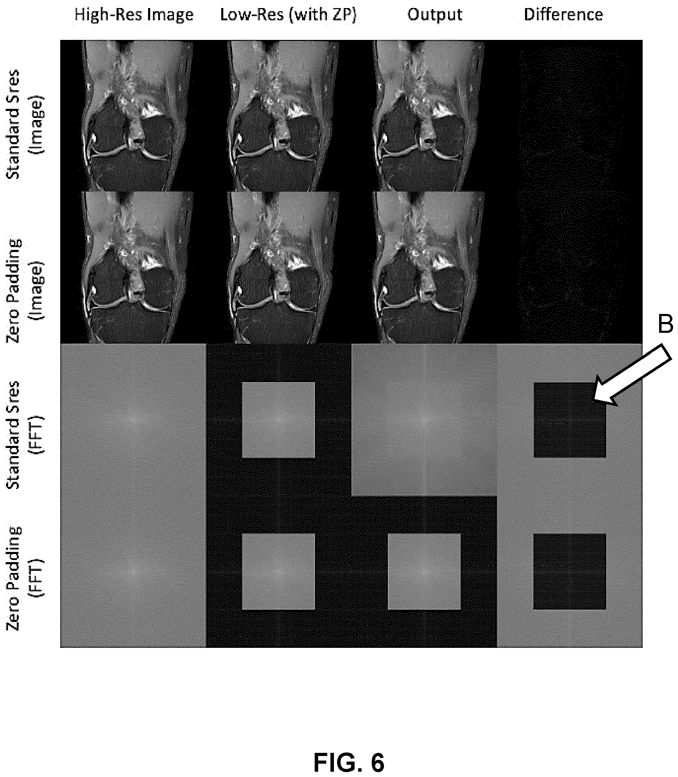

By way of demonstrating results provided by the proposed concept(s), reference will now be made to Figs. 5 and 6 which present respective super resolution approaches.

Fig. 5 is a simple super resolution network without employing the proposed data perseveration concept(s). The resulting difference from the output of the model and the zero padded version of the low-resolution image shows that the model modifies the low frequencies (highlighted by the arrow labelled "A"). This is a side effect that can reduce confidence in the model.

Fig. 6 is a super resolution network which employs the proposed data perseveration concept(s). The resulting k-space is consistent with the low-resolution image, as demonstrated by the difference in Fourier space between the high-resolution image and the zero padded version of the low-resolution image (highlighted by the arrow labelled "B"). That is, with the proposed data preservation approach, it is noted there is no difference in the low-frequency content between the FFT of the output and the FFT of the zero padded image, thus demonstrating that the low-frequency content is preserved.

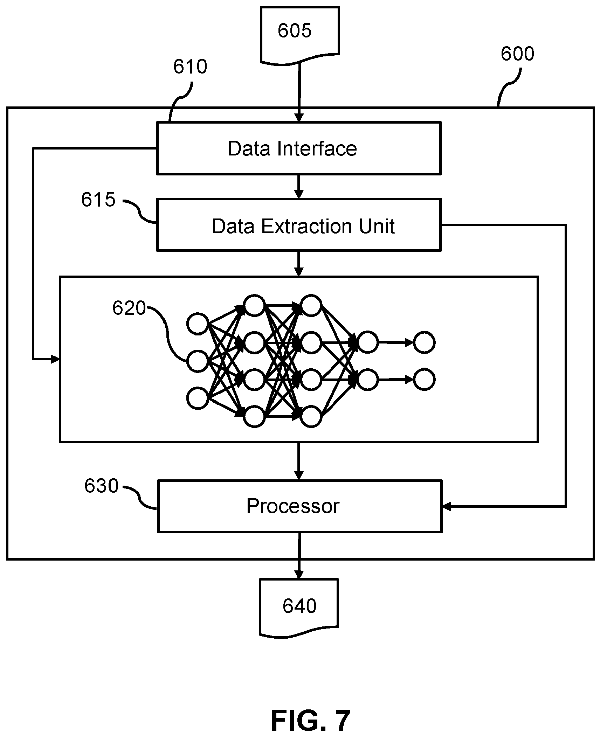

By way of summary of a proposed implementation, Fig. 7 depicts a simplified block diagram of an image processing system 600 according to an embodiment.

The system comprises a data interface 610 that is configured to obtain an input image 605. As detailed above, the input image 605 may comprise a 2-D medical image. However, other embodiments may be configured to handle 3-D (or higher-dimensional) images or raw data.

A data extraction unit 615 of the system 600 is configured to extract, from the input image 605, image preservation data describing data of the input image to be preserved;

A machine learning unit 620 of the system 600 is configured to receive the input mage 605 from the data interface 610. The machine learning unit 620 is configured to process the input image 605 with a machine learning algorithm to generate a predicted image. Specifically, the machine learning algorithm is trained to predict (as the predicted image) a transformed version of the input image.

The system 600 also comprises a processor 630 that is configured to modify the predicted image based on the extracted image preservation data to generate an output image 640. The output image 640 is provided as an output from the system 600 and may thus be used for subsequent training of the machine learning algorithm.

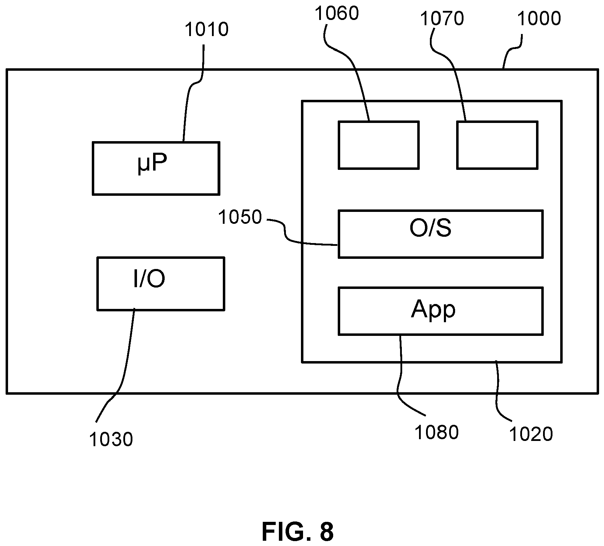

Fig. 8 illustrates an example of a computer 1000 within which one or more parts of an embodiment may be employed. Various operations discussed above may utilize the capabilities of the computer 1000. For example, one or more parts of an image processing system according to an embodiment may be incorporated in any element, module, application, and/or component discussed herein. In this regard, it is to be understood that system functional blocks can run on a single computer or may be distributed over several computers and locations (e.g. connected via internet).

The computer 1000 includes, but is not limited to, PCs, workstations, laptops, PDAs, palm devices, servers, storages, and the like. Generally, in terms of hardware architecture, the computer 1000 may include one or more processors 1010, memory 1020 and one or more I/O devices 1030 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 1010 is a hardware device for executing software that can be stored in the memory 1020. The processor 1010 can be virtually any custom made or commercially available processor, a central processing unit (CPU), a digital signal processor (DSP), or an auxiliary processor among several processors associated with the computer 1000, and the processor 1010 may be a semiconductor-based microprocessor (in the form of a microchip) or a microprocessor.

The memory 1020 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 1020 may incorporate electronic, magnetic, optical, and/or other types of storage media. Note that the memory 1020 can have a distributed architecture, where various components are situated remote from one another, but can be accessed by the processor 1010.

The software in the memory 1020 may include one or more separate programs, each of which comprises an ordered listing of executable instructions for implementing logical functions. The software in the memory 1020 includes a suitable operating system (O/S) 1050, compiler 1060, source code 1070, and one or more applications 1080 in accordance with exemplary embodiments. As illustrated, the application 1080 comprises numerous functional components for implementing the features and operations of the exemplary embodiments. The application 1080 of the computer 1000 may represent various applications, computational units, logic, functional units, processes, operations, virtual entities, and/or modules in accordance with exemplary embodiments, but the application 1080 is not meant to be a limitation.

The operating system 1050 controls the execution of other computer programs, and provides scheduling, input-output control, file and data management, memory management, and communication control and related services. It is contemplated by the inventors that the application 1080 for implementing exemplary embodiments may be applicable on all commercially available operating systems.

Application 1080 may be a source program, executable program (object code), script, or any other entity comprising a set of instructions to be performed. When a source program, then the program is usually translated via a compiler (such as the compiler 1060), assembler, interpreter, or the like, which may or may not be included within the memory 1020, so as to operate properly in connection with the O/S 1050. Furthermore, the application 1080 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, .NET, and the like.

The I/O devices 1030 may include input devices such as, for example but not limited to, a mouse, keyboard, scanner, microphone, camera, etc. Furthermore, the I/O devices 1030 may also include output devices, for example but not limited to a printer, display, etc. Finally, the I/O devices 1030 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 1030 also include components for communicating over various networks, such as the Internet or intranet. If the computer 1000 is a PC, workstation, intelligent device or the like, the software in the memory 1020 may further include a basic input output system (BIOS) (omitted for simplicity). The BIOS is a set of essential software routines that initialize and test hardware at start-up, start the O/S 1050, and support the transfer of data among the hardware devices. The BIOS is stored in some type of read-only-memory, such as ROM, PROM, EPROM, EEPROM or the like, so that the BIOS can be executed when the computer 800 is activated.

When the computer 1000 is in operation, the processor 1010 is configured to execute software stored within the memory 1020, to communicate data to and from the memory 1020, and to generally control operations of the computer 1000 pursuant to the software. The application 1080 and the O/S 1050 are read, in whole or in part, by the processor 1010, perhaps buffered within the processor 1010, and then executed.

When the application 1080 is implemented in software it should be noted that the application 1080 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 1080 can be embodied in any computer-readable medium for use by or in connection with an instruction execution system, apparatus, or device, such as a computer-based system, processorcontaining system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The methods of Figs. 1-4 and the system of Fig. 7, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Figs. 2-4 and 7 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. An image processing method comprising:
extracting, from an input image, image preservation data describing data of the input image to be preserved;
processing the input image with a machine learning algorithm to generate a predicted image, the machine learning algorithm being trained to predict a transformed version of the input image; and
modifying the predicted image based on the image preservation data to generate an output image.

2. The image processing method of claim 1, wherein the image preservation data describes spatial frequency data of the input image for a frequency range of interest, and wherein modifying the predicted image based on the image preservation data to generate an output image comprises
modifying spatial frequency data of the predicted image based on the spatial frequency data of the input image for the frequency range of interest.

3. The image processing method of claim 2, wherein modifying spatial frequency data of the predicted image comprises:
replacing, for the frequency range of interest, spatial frequency data of the predicted image with spatial frequency data of the input image.

4. The image processing method of any of claims 1 to 3, wherein the machine learning algorithm is trained to predict a transformed version of the input image based on a machine learning model that is configured to perform at least one of:
a super-resolution reconstruction of the input image;
denoising of the input image;
anti-ringing of the input image; and
sharpening of the input image.

5. The image processing method of any of claims 1 to 4, wherein the machine learning algorithm is trained using a training algorithm configured to receive an array of known training outputs and respective training inputs, wherein a known training output comprises a training image, and wherein a respective training input comprises a transformed or simulated version of the training image.

6. The image processing method of any of claims 1 to 5, further comprising:
computing a loss value based on the output image and a respective known output image for the input image.

7. The method of any of claims 1 to 6, wherein extracting, from the input image, image preservation data comprises:
extracting the k-space of the input image.

8. The method of any of claims 1 to 6, wherein extracting, from the input image, image preservation data comprises:
splitting the input image into two or more frequency ranges.

9. The method of any of claims 1 to 8, wherein extracting, from the input image, image preservation data comprises:
transforming the input image to the frequency domain to generate a frequency domain representation of the input image; and
determining image preservation data based on the frequency domain representation of the input image.

10. The method of any of claims 1 to 9, wherein the input image comprises an MRI image, a sonography image, a PET/SPECT image or a CT image.

11. A computer program comprising code means for implementing the method of any preceding claim when said program is run on a processing system.

12. An image processing system comprising:
a data extraction unit configured to extract, from an input image, image preservation data describing data of the input image to be preserved;
a machine learning unit configured to processing the input image with a machine learning algorithm to generate a predicted image, the machine learning algorithm being trained to predict a transformed version of the input image; and
a processor adapted to modify the predicted image based on the image preservation data to generate an output image.

13. The system of claim 12, wherein the data extraction unit is configured to extract frequency domain version of the input image.

14. The system of claim 12, wherein the data extraction unit is configured to split the input image into two or more frequency ranges.

15. The system of any of claims 12 to 14, wherein the data extraction unit is configured to:
transform the input image to the frequency domain to generate a frequency domain representation of the input image; and
determine image preservation data based on the frequency domain representation of the input image.
